# FASCICULE DE BREVET EUROPEEN

(11) **EP 2 897 241 B1**
(45) Date de publication et mention de la délivrance du brevet: **06.05.2020**
(21) Numéro de dépôt: 14200545.3
(22) Date de dépôt: 30.12.2014
(51) Int. Cl.: H02G 15/105, H02G 9/06, H02H 3/04

(54) **Ligne électrique à haute tension enterrée**
Erdverlegte Hochspannungsstromleitung
Buried high-voltage power line

(30) Priorité: 15.01.2014 FR 1450315
(43) Date de publication de la demande: 22.07.2015
(73) Titulaire: Nexans, 92400 Courbevoie (FR)
(72) Inventeur: Dubois, David, 62890 CLERQUES (FR); Henriksen, Martin, Mt PLEASANT, SC South Carolina 29464 (US); Rimbault, Jean-Sébastien, 93400 Saint-Ouen (FR)
(74) Mandataire: Feray, Valérie

(56) Documents cités:
- EP-A1- 2 541 712
- EP-A2- 1 022 837
- WO-A1-99/50865
- CN-U- 201 556 921
- JP-A- H01 222 612
- KR-A- 20100 047 581
- US-A- 4 464 583

## Description

L'invention concerne une ligne électrique à haute tension enterrée.

Une telle ligne triphasée comporte en général trois câbles conducteurs de phases, chacun constitué par une succession de portions de câbles reliées entre elles par une jonction à arrêt d'écran.

Une telle ligne est décrite dans les documents de brevet EP 2 541 712 et US 4 464 583.

Les trois câbles de liaison coaxiaux issus des trois jonctions d'une même zone sont reliés à un coffret à trois voies coaxiales avec permutation. Ce coffret également enterré est situé à proximité de la ligne dans la zone concernée par les jonctions. Il est alors possible de loger dans ce coffret des para-surtenseurs ou parafoudres dont la fonction est de limiter les surtensions éventuelles appliquées aux arrêts d'écran des jonctions.

Ce coffret est en général disposé dans un puits de béton.

Selon ce document, la structure principale de toutes les jonctions est identique et présente une interface de connexion standard reliée à l'écran d'une première portion de câble et à l'écran d'une seconde portion de câble. Un module variable doté d'une interface de connexion complémentaire et d'au moins un câble de liaison est apte à venir s'enficher dans l'interface de connexion de la structure principale de chaque jonction.

Une telle installation des parafoudres pose les problèmes techniques suivants.

La liaison entre chaque connexion et le coffret est effectué au moyen d'un câble coaxial de forte section qui est conçu pour résister à l'éventuel courant de court-circuit et qui peut être de longueur relativement importante.

Ces câbles de liaison créent une barrière de tension entre les parafoudres et les jonctions à arrêt d'écran à protéger. Il en résulte une réduction de l'efficacité des parafoudres dans le cas de surtensions de défaut de spectre à haute fréquence.

Par ailleurs, pour vérifier le bon état du parafoudre dans le coffret, il est nécessaire périodiquement de déconnecter la ligne, d'ouvrir le puits, d'ouvrir le coffret et de démonter le parafoudre pour le tester. Une telle opération est fastidieuse, longue et onéreuse pour l'opérateur de la ligne. Document WO 99/50865 divulge un parafoudre équipé d'un capteur de temperature.

Enfin, ces câbles de liaison sont de coût important et leur installation est également coûteuse. Le puits en béton contenant le coffret, sa fabrication et son installation également un coût non négligeable.

L'invention résout ces problèmes techniques et pour ce faire propose une ligne électrique à haute tension triphasée et enterrée selon la revendication 1, comprenant trois câbles conducteurs de phase, chacun desdits câbles conducteurs étant constitué par une succession de portions de câbles reliées entre elles par une jonction à arrêt d'écran, comportant une interface de connexion reliée à l'écran d'une première portion de câble et à l'écran d'une seconde portion aboutée de câble, un module pourvu d'un boîtier d'extension de la jonction et doté d'une interface de connexion complémentaire connectée à l'interface de connexion de chaque jonction, ligne caractérisée en ce qu'un parafoudre est disposé dans ledit module et connecté électriquement à ladite interface de connexion complémentaire du module et en ce que ledit parafoudre est équipé d'un dispositif de contrôle de son état disposé dans ledit boîtier connecté à un générateur de signaux.

Ainsi, le parafoudre est disposé de façon très proche de l'interruption des écrans ce qui assure son efficacité maximale contre les surtensions même à spectre haute fréquence.

Par ailleurs, la construction d'un puits en béton ou équivalent est évitée.

L'état du parafoudre peut ainsi être contrôlé en surface sans nécessité de creuser le sol et de démonter le boîtier et sans nécessité de couper la ligne.

Ledit dispositif de contrôle comporte un capteur de température.

En effet, la détérioration d'un parafoudre est provoquée par un courant de fuite qui entraîne une augmentation de la température, à un niveau pouvant être de l'ordre de 100°C.

Ledit capteur de température est avantageusement un thermo-contact de type bilame ou un capteur de température électronique miniaturisé, appliqué audit parafoudre.

Ledit générateur de signaux est de préférence alimenté électriquement par l'intermédiaire d'un transformateur de courant.

De préférence, ledit générateur de signaux est un générateur de signal acoustique ou un générateur de signaux radio d'identification.

L'invention est décrite ci-après plus en détail à l'aide de figures ne représentant que des modes de réalisation préféré de l'invention.
La figure 1 est une vue de côté d'une jonction à arrêts d'écran, selon l'invention.
La figure 2 est une vue en détail et en perspective d'un module ouvert conforme à l'invention.
La figure 3 est une vue en détail et en perspective d'un module selon un premier mode de réalisation de l'invention.
La figure 4 est une vue en détail et en perspective d'un module selon un second mode de réalisation de l'invention.

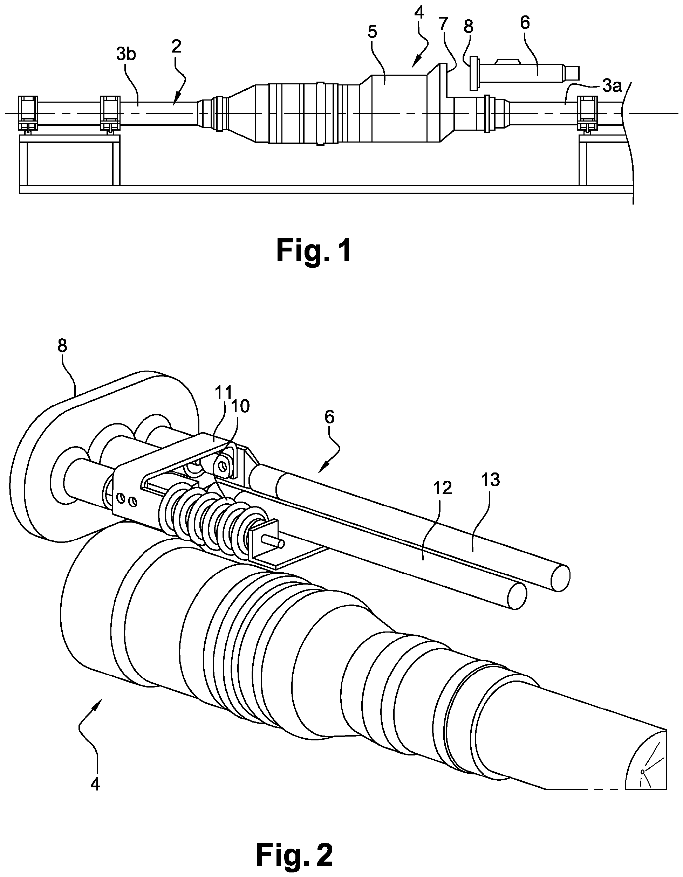

Comme décrit en détail dans le document de brevet EP 2 541 712 et représenté sur la figure 1, une ligne électrique à haute tension triphasée et enterrée, comprenant trois câbles conducteurs de phase 2, chacun des câbles conducteurs étant constitué par une succession de portions de câbles 3a, 3b reliées entre elles par une jonction à arrêt d'écran 4, comporte une interface de connexion 7 reliée à l'écran d'une première portion de câble 3a et à l'écran d'une deuxième portion aboutée de câble 3b. Un module 6 pourvu d'un boîtier d'extension de la jonction et doté d'une interface de connexion complémentaire 8 est connecté, de préférence par enfichage, à l'interface de connexion 7 de la structure principale 5 de chaque jonction.

Comme visible sur la figure 2 où le module est dépourvu de son boîtier, selon l'invention, un parafoudre 10 est disposé dans le module 6 et connecté mécaniquement et électriquement à l'interface de connexion complémentaire 8 du module.

Une structure de profilés métalliques 11 est montée sur cette interface de connexion 8 et porte d'une part deux câbles de liaison mono-polaires 12, 13, l'un étant relié à l'écran de la première portion de câble et l'autre étant relié à l'écran de la seconde portion de câble, et d'autre part le parafoudre 10 connecté par ses bornes à chacune des cosses d'extrémité de ces câbles, par une conception adaptée des profilés pliés en U ou à angle droit, par exemple.

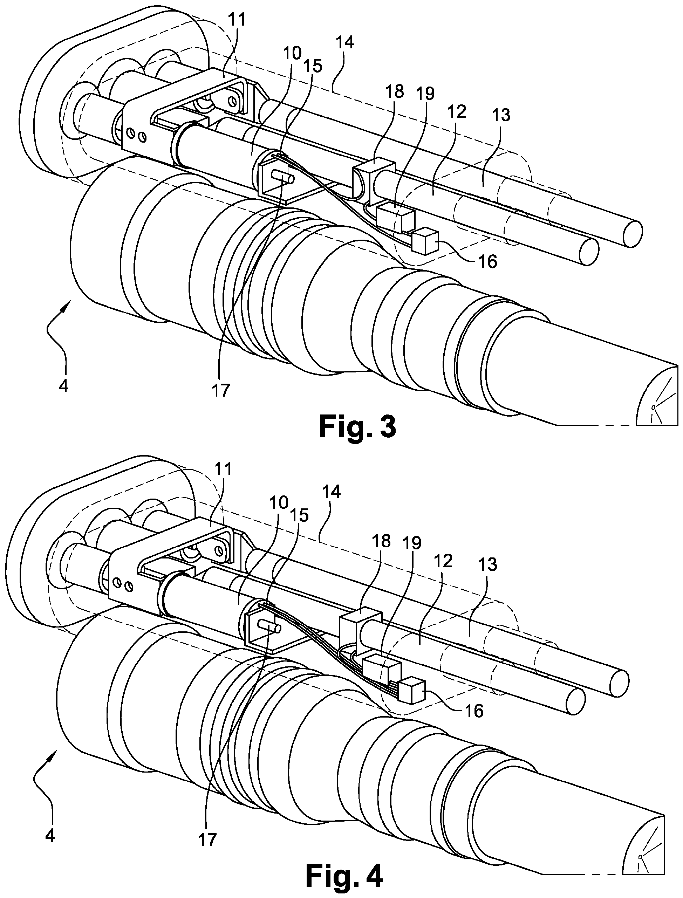

Comme représenté en traits mixtes interrompus en figures 3 et 4, le module est contenu dans un boîtier 14 d'extension de la jonction, en matériau isolant, et le parafoudre 10 est équipé d'un dispositif de contrôle de son état, disposé dans ce boîtier.

Ce dispositif de contrôle comporte un capteur de température 15 collé directement sur le parafoudre 10 dont il détecte la température et connecté à un générateur de signaux 16. Ce capteur de température 15 est avantageusement un thermo-contact de type bilame connecté audit parafoudre, plus précisément à proximité d'une fixation par vissage d'une borne 17 du parafoudre dans un des profilés. Cette structure de profilés 11 sert à connecter le parafoudre 10 entre les deux bornes de l'arrêt d'écran de la jonction 4.

Le générateur de signaux 16 est alimenté électriquement par l'intermédiaire d'un transformateur de courant 18 porté par un des câbles de liaison 12 et alimenté par le circuit primaire de ce transformateur 18 à ce câble 12.

Ce transformateur de courant 18 est connecté à un ensemble 19 assurant son fonctionnement sur une longue durée. Cet ensemble 19 comprend un circuit comportant un pont redresseur à diodes pour la transformation du courant alternatif en courant continu, un filtre de compatibilité électromagnétique appelé couramment « filtre CEM » et un régulateur de tension à découpage. Cet ensemble 19 peut également comprendre une batterie ou un super-condensateur, assurant l'alimentation en cas de courant au circuit primaire du transformateur trop faible.

Comme représenté sur la figure 3, selon un premier mode réalisation, le générateur de signaux 16 est un générateur de signal acoustique, qui peut être par exemple un haut-parleur miniature ou un module piézoélectrique.

Dans ce cas, les liaisons thermo-contact/générateur et parafoudre/transformateur/générateur sont constituées d'un fil simple. Lorsque le thermo-contact est fermé suite à une augmentation de température, le courant active le générateur de signaux 16 dont l'émission de bruit peut être détectée au travers de la couche du sol recouvrant la jonction, lors d'une visite de maintenance de la ligne en surface, ce qui permet de détecter un défaut du parafoudre et envisager de le remplacer.

L'ensemble 19 alimente en électricité le circuit constitué du capteur de température 15 et du générateur de signal acoustique 16.

Comme représenté sur la figure 4, selon un second mode réalisation, le générateur de signaux 16 est un générateur de signaux radio d'identification (appelé couramment RFI D) à deux états.

Dans ce cas, les liaisons thermo-contact/générateur et parafoudre/transformateur/générateur sont constituées d'un double fil. Lorsque le thermo-contact est ouvert, un signal de bon fonctionnement est transmis par radio fréquence par le générateur de signaux. Lorsque le thermo-contact est fermé suite à une augmentation de température, un signal de défaut est transmis par radio fréquence par le générateur de signaux, ce signal pouvant être détecté à distance au travers de la couche du sol recouvrant la jonction, ce qui permet de détecter un défaut du parafoudre et d'envisager de le remplacer.

L'ensemble 19 alimente en électricité le circuit constitué du capteur de température 15 et du générateur de signaux radio d'identification 16.

A la place d'un thermo-contact de type bilame 15, il peut être utilisé un capteur électronique de température miniaturisé associé de préférence à un transmetteur de type RFI D. La valeur même de la température du parafoudre peut être lue à distance via un module comprenant une antenne réceptrice RFI D et un ordinateur portable.

L'alimentation du thermo-contact ou de l'ensemble capteur de température/transmetteur RFID est pérennisée pendant tout la durée de vie de l'ouvrage grâce à l'ensemble transformateur de courant, redresseur à diode, filtre CEM, alimentation à découpage et batterie ou supercondensateur.

## Revendications

1. Ligne électrique à haute tension triphasée et enterrée, comprenant trois câbles conducteurs de phase, chacun desdits câbles conducteurs 5 étant constitué par une succession de portions de câbles (3a, 3b) reliées entre elles par une jonction à arrêt d'écran (4), comportant une interface de connexion (7) reliée à l'écran d'une première portion de câble (3a) et à l'écran d'une seconde portion aboutée de câble (3b), un module (6) pourvu d'un boîtier (14) d'extension de la jonction et doté d'une interface de connexion complémentaire (8) connectée à l'interface de connexion (7) de chaque jonction, ligne **caractérisée en ce qu'**un parafoudre (10) est disposé dans ledit boîtier (14) dudit module (6) et connecté électriquement à ladite interface de connexion complémentaire (8) du module et **en ce que** ledit parafoudre (10) est équipé d'un dispositif de contrôle de son état disposé dans ledit boîtier (14) comportant un capteur de température (15), directement collé sur le parafoudre (10) dont il détecte la température et connecté à un générateur de signaux (16) disposé dans ledit boîtier (14).

2. Ligne électrique selon la revendication précédente, **caractérisée en ce que** ledit capteur de température (15) est un thermo-contact de type bilame appliqué audit parafoudre (10).

3. Ligne électrique selon la revendication 1, **caractérisée en ce que** ledit capteur de température (15) est un capteur de température électronique miniaturisé, connecté audit parafoudre (10).

4. Ligne électrique selon la revendication 1 ou 2, **caractérisée en ce que** ledit générateur de signaux (16) est alimenté électriquement par l'intermédiaire d'un transformateur de courant (18).

5. Ligne électrique selon l'une des revendications précédentes, **caractérisée en ce que** ledit générateur de signaux (16) est un générateur de signal acoustique.

6. Ligne électrique selon l'une des revendications 1 à 4, **caractérisée en ce que** ledit générateur de signaux (16) est un générateur de signaux radio d'identification.

## Patentansprüche

1. Dreiphasige und erdverlegte Hochspannungsstromleitung, umfassend drei Phasenleiterkabel, wobei jedes der Leiterkabel 5 aus einer Abfolge von Kabelabschnitten (3a, 3b) gebildet ist, die durch eine Verbindung mit Abschirmungshalterung (4) miteinander verbunden sind, aufweisend eine Anschlussschnittstelle (7), die mit der Abschirmung eines ersten Kabelabschnitts (3a) und mit der Abschirmung eines zweiten Kabelendabschnitts (3b) verbunden ist, ein Modul (6), ausgestattet mit einem Erweiterungsgehäuse (14) des Anschlusses und versehen mit einer komplementären Anschlussschnittstelle (8), die an die Anschlussschnittstelle (7) jedes Anschlusses angeschlossen ist, wobei die Leitung **dadurch gekennzeichnet ist, dass** ein Überspannungsschutz (10) in dem Gehäuse (14) des Moduls (6) angeordnet und an die komplementäre Anschlussschnittstelle (8) des Moduls elektrisch angeschlossen ist und dass der Überspannungsschutz (10) mit einer Kontrollvorrichtung seines Zustands ausgestattet ist, die in dem Gehäuse (14) angeordnet ist, aufweisend einen Temperatursensor (15), direkt auf den Überspannungsschutz (10) geklebt, dessen Temperatur er ermittelt, und an einen Signalgeber (16) angeschlossen ist, der in dem Gehäuse (14) angeordnet ist.

2. Stromleitung nach vorangehendem Anspruch, **dadurch gekennzeichnet, dass** der Temperatursensor (15) ein Thermokontakt vom Typ Bimetall ist, der an dem Überspannungsschutz (10) anliegt.

3. Stromleitung nach Anspruch 1, **dadurch gekennzeichnet, dass** der Temperatursensor (15) ein miniaturisierter elektronischer Temperatursensor ist, der an den Überspannungsschutz (10) angeschlossen ist.

4. Stromleitung nach Anspruch 1 oder 2, **dadurch gekennzeichnet, dass** der Signalgeber (16) über einen Stromtransformator (18) elektrisch versorgt wird.

5. Stromleitung nach einem der vorangehenden Ansprüche, **dadurch gekennzeichnet, dass** der Signalgeber (16) ein akustischer Signalgeber ist.

6. Stromleitung nach einem der Ansprüche 1 bis 4, **dadurch gekennzeichnet, dass** der Signalgeber (16) ein Funkidentifikations-Signalgeber ist.

## Claims

1. A three-phase and buried high-voltage power line, comprising three conductive phase cables, each of said conductive cables 5 being made up of a series of cable portions (3a, 3b) coupled to one another by a screen-stop junction (4), including a connection interface (7) coupled to the screen of a first cable portion (3a) and to the screen of a second butted cable portion (3b), a module (6) provided with a housing (14) for extending the junction and equipped with a complementary connection interface (8) connected to the connection interface (7) of each junction, the line being **characterized in that** a lightning arrester (10) is arranged in said housing (14) of said module (6) and electrically connected to said complementary connection interface (8) of the module and **in that** said lightning arrester (10) is equipped with a device for controlling its state arranged in said housing (14) including a temperature sensor (15), directly glued on the lightning arrester (10), the temperature of which it detects, and connected to a signal generator (16) arranged in said housing (14).

2. The power line according to the preceding claim, **characterized in that** said temperature sensor (15) is a thermoswitch of the bimetallic strip type applied to said lightning arrester (10).

3. The power line according to claim 1, **characterized in that** said temperature sensor (15) is a miniaturized electronic temperature sensor, connected to said lightning arrester (10).

4. The power line according to claim 1 or 2, **characterized in that** said signal generator (16) is supplied with electricity by means of a current transformer (18).

5. The power line according to one of the preceding claims, **characterized in that** said signal generator (16) is an acoustic signal generator.

6. The power line according to one of claims 1 to 4, **characterized in that** said signal generator (16) is a radio identification signal generator.
